# EUROPÄISCHE PATENTANMELDUNG

(11) **EP 3 933 956 A1**
(43) Veröffentlichungstag der Anmeldung: **05.01.2022**
(21) Anmeldenummer: 20183355.5
(22) Anmeldetag: 01.07.2020
(51) Int. Cl.: H01M 2/10, H01M 2/34

(54) **AKKUPACK MIT POUCHZELLE**

(71) Anmelder: Hilti Aktiengesellschaft, 9494 Schaan (LI)
(72) Erfinder: Ender, Moses, 9470 Buchs (CH); Lepiorz, Matthias, 09112 Chemnitz (DE); Hauser, Klaus, 86830 Schwabmünchen (DE); Martiny, Nora, 82211 Herrsching-Breitbrunn (DE); Stanger, Robert, 87600 Kaufbeuren (DE); Ziegler, Bernd, 86830 Schabmünchen (DE); Sax, Kathrin, 86937 Scheuring (DE)
(74) Vertreter: Hilti Aktiengesellschaft Corporate Intellectual Property

(57) **Zusammenfassung**

Akkupack mit wenigstens einer Pouchzelle, wobei der Akkupack einen Näherungssensor aufweist, der zum Detektieren eines Aufblähens der Pouchzelle innerhalb des Akkupacks angeordnet ist.

## Beschreibung

Die vorliegende Erfindung betrifft einen Akkupack mit wenigstens einer Pouchzelle. Akkupacks sowie Pouchzellen sind grundsätzlich aus dem Stand der Technik bekannt. Ebenfalls aus dem Stand der Technik bekannt ist das Phänomen des sogenannten Swellings, auch Ausdehnen oder Aufblähen genannt. Dies ist problematisch, da es zu einem Aufplatzen einer Außenhülle der Pouchzelle führen kann. Dadurch kann wiederum der Akkupack selbst oder dessen Elektronik beschädigt werden, was zu einer Gefahr für den Benutzer führen kann.

Die europäische Patentanmeldung EP 3 591 739 A1 beschreibt ein Akkupack mit einer Pouchzelle, wobei der Akkupack wenigstens einen Stromunterbrecher aufweist, der ausgebildet ist eine Stromentnahme aus der Pouchzelle zumindest zeitweise zu unterbrechen, wobei der Stromunterbrecher durch ein Aufblähen der Pouchzelle ausgelöst wird.

Die europäische Patentanmeldung EP 3 588 607A1 offenbart ein Akkupack mit wenigstens einer Pouchzelle, wobei der Akkupack wenigstens ein elektrisch leitfähiges Filament aufweist, das die Pouchzelle zumindest abschnittsweise derart umgibt oder begrenzt, dass ein Aufblähen der Pouchzelle ein Zertrennen des Filaments bewirkt.

Es ist Aufgabe der vorliegenden Erfindung ein alternativ ausgestalteten Akkupack zu schaffen, der die Grundlage für eine erhöhte Betriebssicherheit bietet.

Die Aufgabe wird dadurch gelöst, dass der Akkupack einen Näherungssensor aufweist, der zum Detektieren eines Aufblähens der Pouchzelle innerhalb des Akkupacks angeordnet ist. Es hat sich als vorteilhaft herausgestellt, wenn der Näherungssensor zum kontaktlosen und/oder kraftlosen Detektieren des Aufblähens der Pouchzelle innerhalb des Akkupacks angeordnet ist.

Die Erfindung schließt die Erkenntnis, dass eine druckbehaftete Detektion des Aufblähens der Pouchzelle, beispielsweise mittels eines Piezosensors, zu einer weiteren Schädigung der Pouchzelle führen kann. Dieser Nachteil wird durch den erfindungsgemäß vorgesehenen Näherungssensor vermieden. Des Weiteren schafft der Näherungssensor beispielsweise die Grundlage für eine graduelle Strombegrenzung - im Gegensatz etwa zu binär wirkenden Stromunterbrechern des Standes der Technik.

Es hat sich als vorteilhaft herausgestellt, wenn eine Messachse des Näherungssensor parallel zur Stapelrichtung der Pouchzelle orientiert ist. Eine Messachse ist vorzugsweise diejenige Achse entlang derer der Näherungssensor im bestimmungsgemäßen Gebrauch eine Zustandsänderung (am besten) detektieren kann. Es hat sich als vorteilhaft herausgestellt, wenn der Näherungssensor - quer zur Stapelrichtung SR - mittig oberhalb der ersten (bezogen auf eine Anschlussseite des Akkupacks obersten) Pouchzelle angeordnet ist.

In einer besonders bevorzugten Ausgestaltung weist der Akkupack einen mit dem Näherungssensor signalverbundenen Sensorschaltkreis auf, mittels dem das Aufblähen der Pouchzelle detektiert wird. Bevorzugt ist der Sensorschaltkreis ausgebildet, eine Zustandsänderung des Näherungssensor elektrisch auszuwerten. Die Zustandsänderung hängt vom konkreten Messprinzip ab, das weiter unten genauer erläutert wird. Der Sensorschaltkreis kann ausgebildet sein eine Zustandsänderung der Pouchzelle kontinuierlich oder lediglich bei bestimmten Zuständen (während Betrieb, in Ruhe, beim Laden etc.) zu überwachen. Der Sensorschaltkreis ist vorzugsweise innerhalb eines Gehäuses des Akkupacks angeordnet.

In einer weiteren besonders bevorzugten Ausgestaltung weist der Akkupack einen Steuerschaltkreis auf, der, wenn der Sensorschaltkreis ein Aufblähen der Pouchzelle detektiert hat, eine Stromentnahme aus der dem Akkupack unterbricht oder reduziert. Alternativ oder zusätzlich kann der Steuerschaltkreis ausgebildet sein einen Schnellademodus des Akkupacks zu deaktivieren und/oder einen Ladestrom und/oder eine Ladekapazität des Akkupacks zu begrenzen. In einer weiteren besonders bevorzugten Ausgestaltung ist der Steuerschaltkreis ausgebildet eine maximale Temperatur der Pouchzelle währen der Ladung und/oder Entladung zu begrenzen. Der Steuerschaltkreis ist vorzugsweise innerhalb des Gehäuses des Akkupacks angeordnet.

Der Sensorschaltkreis und/oder der Steuerschaltkreis können Teil eines Batteriemanagementsystems (BMS) des Akkupacks und/oder einer elektrischen Handwerkzeugmaschine sein. Bevorzugt ist das Batteriemanagementsystem im Akkupack integriert. Es hat sich als vorteilhaft herausgestellt, wenn der Sensorschaltkreis etwaige Messdaten (wie beispielsweise den Zustand des Näherungssensors) zeitlich gemittelt oder gefiltert an den Steuerschaltkreis übermittelt, so dass beispielsweise ein unbeabsichtigtes Abschalten (beispielsweise lediglich zeitweises Aufschwellen der Pouchzelle durch zeitweisen Transport im Flugzeug) des Akkupacks verhindert werden kann.

Im Folgenden werden bevorzugte Ausgestaltungen des Näherungssensor genauer beschrieben.

In einer ersten bevorzugten Ausgestaltung ist der Näherungssensor als optischer Sensor ausgebildet. Der optische Sensor weist vorzugsweise einen gehäusefesten Lichtsender und einen gehäusefesten Lichtempfänger auf. Der Lichtsender ist vorzugsweise als LED, insbesondere als IR-LED ausgebildet. Es hat sich als vorteilhaft herausgestellt, wenn der Lichtempfänger als lichtempfindlicher Widerstand oder als Fotodiode ausgebildet ist. Ein durch den Lichtsender ausgesandter Lichtstrahl wird durch eine Oberfläche der Pouchzelle reflektiert und - je nach Abstand zwischen der Oberfläche der Pouchzelle und dem Lichtempfänger - durch den Lichtempfänger detektiert. Das Signal welches der Sensorschaltkreis vom Lichtempfänger des Näherungssensors erhält ist ein quantitatives Maß des Swelling-Zustandes der Pouchzelle.

In einer zweiten bevorzugten Ausgestaltung ist der Näherungssensor als kapazitiver Sensor ausgebildet. Der kapazitive Sensor erfasst eine Kapazitätsänderung zwischen einer aktiven Sensoroberfläche, die vorzugsweise der Pouchzelle zugewandt ist, und einer Oberfläche der Pouchzelle. Eine Kapazität die der Sensorschaltkreis von dem kapazitiven Sensor aufnimmt ist ein quantitatives Maß des Swelling-Zustandes d.h. der Volumenzunahme der Pouchzelle.

In einer dritten bevorzugten Ausgestaltung ist der Näherungssensor als induktiver Sensor ausgebildet. Es hat sich als vorteilhaft herausgestellt, wenn der induktive Sensor einen Oszillator aufweist, dessen Oszillatorspannung durch eine metallische Folie - Pouchzellen weisen typischerweise eine dünne Aluminiumverbundfolie auf - beeinflusst wird. Die Höhe der Oszillatorspannung ist ein Maß für den Swelling-Zustand der Pouchzelle. Dabei korreliert ein zunehmendes Swelling vorzugsweise mit einem Sinken der Oszillatorspannung. Durch eine Auswertung der im Zuge des fortschreitenden Alterungsprozesses der Pouchzelle sinkenden Oszillatorspannung kann durch den Steuerschalkreis eine graduell sinkende Stromschwelle für den Ladestrom realisiert werden.

Die beschriebenen Ausgestaltungen des Näherungssensors haben den Vorteil, dass eine Volumenzunahme der Pouchzelle ohne eine weitere Modifikation der Pouchzelle detektierbar ist. Dies da die Pouchzelle typischerweise eine dünne Aluminiumverbundfolie aufweist, die sowohl der optischen, kapazitiven und induktiven Detektion unmittelbar zugänglich ist. Bedarfsweise kann an der Oberfläche der Pouchzelle eine zusätzliche Funktionsfläche, beispielsweise in Form eines Senders oder Indikators vorgesehen sein, die eine Detektion durch den entsprechenden Sensor verbessert.

In einer vierten bevorzugten Ausgestaltung ist der Näherungssensor als magnetischer Sensor ausgebildet. Der magnetische Sensor kann als Hall-Sensor oder Reed-Sensor ausgebildet sein.

Es hat sich als vorteilhaft herausgestellt, wenn an der Oberfläche der Pouchzelle eine Funktionsfläche in Form eines Dauermagneten - beispielsweise in Form eines Magnetplättchens - angeordnet ist, dessen Magnetfeld durch den magnetischen Sensor erfasst werden kann.

Die Höhe einer Hallspannung eines Hall-Sensors ist dabei beispielweise ein quantitatives Maß des Swelling-Zustandes d.h. der Volumenzunahme der Pouchzelle.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:

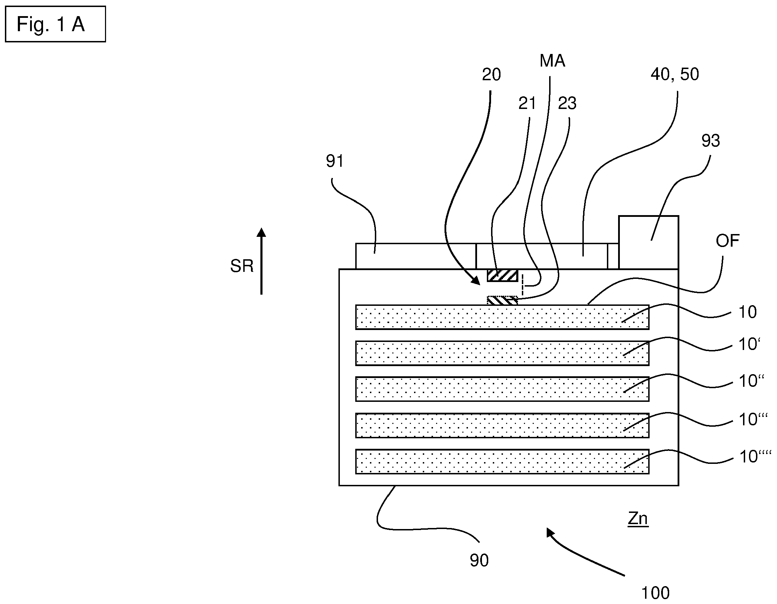

- Fig. 1A: ein bevorzugtes Ausführungsbeispiel eines erfindungsgemäßen Akkupacks mit Pouchzellen in normalen Zustand;

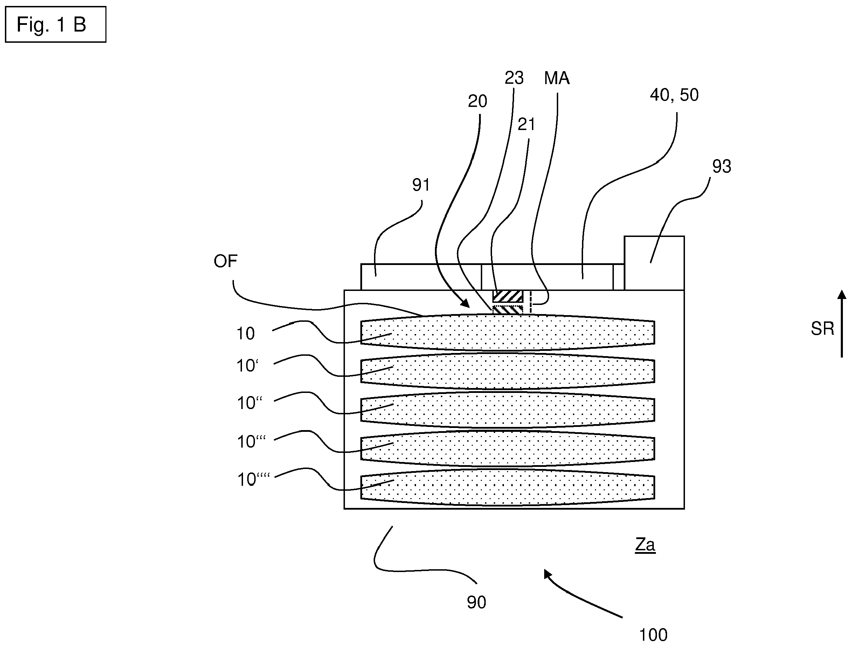

- Fig. 1B: das Ausführungsbeispiel der Fig. 1A, wobei die Pouchzellen aufgebläht sind.

### Ausführungsbeispiel:

Ein erstes bevorzugtes Ausführungsbeispiel einer erfindungsgemäßen Akkupacks 100 ist in Fig. 1 dargestellt. Wie den Figuren 1A und 1B entnommen werden kann, weist der Akkupack 100 eine Mehrzahl flächiger Pouchzellen 10, 10', 10", 10"', 10"" auf, die in Stapelrichtung SR sandwichartig aufgestapelt sind. Dabei zeigt Figur 1A zeigt die Pouchzellen 10, 10', 10", 10'", 10"" im Normalzustand Zn, d.h. sie sind nicht oder allenfalls sehr wenig aufgebläht. Figur 1B) hingegen zeigt die Pouchzellen 10, 10', 10", 10'", 10"" im unerwünschten aufgeblähten Zustand Za (bezogen auf die Stapelrichtung SR).

Die Pouchzellen 10, 10', 10", 10'", 10"" sind Teil eines Akkupacks 100, der für eine hier nicht gezeigte elektrischen Handwerkzeugmaschine bestimmt ist. Die Pouchzellen 10, 10', 10", 10'", 10"" sind in einem Gehäuse 90 eingeschlossen. Das Gehäuse 90 weist eine mechanische Gleitschnittstelle 91 zum mechanischen Verbinden des Akkupacks 100 mit der hier nicht gezeigten Handwerkzeugmaschine auf. Ein elektrisches Kontaktieren des Akkupacks 100 mit der Handwerkzeugmaschine erfolgt über einen elektrischen Kontaktblock 93 des Akkupacks 100.

Erfindungsgemäß weist der Akkupack 100 einen Näherungssensor 20 auf. Der Näherungssensor 20 ist zum Detektieren eines Aufblähens der Pouchzellen 10, 10', 10", 10'", 10"" innerhalb des Gehäuses 90 des Akkupacks 100 angeordnet. Dabei ist eine Messachse ME des Näherungssensor 20 parallel zur Stapelrichtung SR der Pouchzelle 10 orientiert. Die Messachse ME ist diejenige Achse entlang derer der Näherungssensor 20 im bestimmungsgemäßen Gebrauch eine Zustandsänderung detektieren kann. Der Näherungssensor 20 ist - quer zur Stapelrichtung SR - mittig oberhalb der ersten Pouchzelle 10 angeordnet.

Der Akkupack 100 weist einen mit dem Näherungssensor 20 signalverbundenen Sensorschaltkreis 40 auf, mittels dem das Aufblähen der Pouchzelle 10 detektiert wird. Der Akkupack 100 ist ebenfalls ausgestattet mit einem Steuerschaltkreis 50, der, wenn der Sensorschaltkreis 40 ein Aufblähen der Pouchzelle 10 detektiert hat, eine Stromentnahme aus dem Akkupack 100 reduziert. Es sei angemerkt, dass die Reduktion der Stromentnahme aus dem Akkupack 100 lediglich eine beispielhafte Funktion eines Batteriemanagementsystems ist. Alternativ oder zusätzlich kann der Steuerschaltkreis 50 beispielsweise ausgebildet sein einen Schnellademodus des Akkupacks 100 zu deaktivieren.

Im Ausführungsbeispiel der Figur 1 ist der Näherungssensor 20 als Hall-Einheit mit einem gehäusefesten Hall-Sensor 21 und einem auf der Oberfläche OF der oberen Pouchzelle 10 angeordneten Magnetplättchen 23 ausgebildet. Bei normalem Zustand der Pouchzellen Zn in Figur 1A sind der Hall-Sensor 21 und das Magnetplättchen 23 in Stapelrichtung SR weiter voneinander beabstandet als in Figur 2B, welche die Pouchzellen 10, 10', 10", 10"', 10"" in aufgeblähten Zustand Za zeigt. Dementsprechend ist eine durch den Hall-Sensor 21 in Figur 1B aufgenommene Hall-Spannung höher als in Figur 1A. Eine vergleichsweise höhere Hall-Spannung kann beispielsweise eine Auslösebedingung für eine Deaktivierung es Schnellademodus des Akkupacks 100 durch den Steuerschaltkreis 50 sein.

Es sei bemerkt, dass das an der Oberfläche OF der oberen Pouchzelle 10 anzuordnende Magnetplättchen 23 bei anderen Sensorprinzipien verzichtbar ist. Insbesondere kann eine Funktionsfläche bereits auf Grund der Beschaffenheit der Pouchzellen 10 inhärent sein.

So weisen Pouchzellen 10 typischerweise eine dünne Aluminiumverbundfolie auf, deren Annäherung etwa durch einen induktiven Sensor unmittelbar detektierbar ist.

### Bezugszeichenliste

- 10, 10', 10", 10"', 10"": Pouchzellen
- 20: Näherungssensor
- 21: gehäusefestes Hall-Element
- 23: Magnetplättchen (Funktionsfläche)
- 40: Sensorschaltkreis
- 50: Steuerschaltkreis
- 90: Gehäuse
- 91: Gleitschnittstelle
- 93: Kontaktblock
- 100: Akkupack

- OF: Oberfläche
- MA: Messachse
- SR: Stapelrichtung
- Za: aufgeblähter Zustand der Pouchzellen
- Zn: normaler Zustand der Pouchzellen

## Patentansprüche

1. Akkupack (100) mit wenigstens einer Pouchzelle (10),
**dadurch gekennzeichnet, dass** der Akkupack (100) einen Näherungssensor (20) aufweist, der zum Detektieren eines Aufblähens der Pouchzelle (10) innerhalb des Akkupacks (100) angeordnet ist.

2. Akkupack (100) nach Anspruch 1,
**dadurch gekennzeichnet, dass** der Näherungssensor (20) als optischer Sensor ausgebildet ist.

3. Akkupack (100) nach Anspruch 1,
**dadurch gekennzeichnet, dass** der Näherungssensor (20) als kapazitiver Sensor ausgebildet ist.

4. Akkupack (100) nach Anspruch 1,
**dadurch gekennzeichnet, dass** der Näherungssensor (20) als induktiver Sensor ausgebildet ist.

5. Akkupack (100) nach Anspruch 1,
**dadurch gekennzeichnet, dass** der Näherungssensor (20) als magnetischer Sensor ausgebildet ist.

6. Akkupack (100) nach einem der vorangehenden Ansprüche,
**dadurch gekennzeichnet, dass** der Näherungssensor (20) eine Funktionsfläche (23) aufweist, die an einer Oberfläche (OF) der Pouchzelle (10) angeordnet ist.

7. Akkupack (100) nach einem der vorangehenden Ansprüche,
**dadurch gekennzeichnet, dass** eine Messachse (ME) des Näherungssensor (20) parallel zur Stapelrichtung (SR) der Pouchzelle (10) orientiert ist.

8. Akkupack (100) nach einem der vorangehenden Ansprüche,
**dadurch gekennzeichnet, dass** der Akkupack (100) einen mit dem Näherungssensor (20) signalverbundenen Sensorschaltkreis (40) aufweist, mittels dem das Aufblähen der Pouchzelle (10) detektiert wird.

9. Akkupack (100) nach Anspruch 6,
**dadurch gekennzeichnet, dass** der Akkupack (100) einen Steuerschaltkreis (50) aufweist, der, wenn der Sensorschaltkreis (40) ein Aufblähen der Pouchzelle (10) detektiert hat, eine Stromentnahme aus dem Akkupack (100) unterbricht oder reduziert.
